# EUROPÄISCHE PATENTSCHRIFT

(11) **EP 1 071 985 B1**
(45) Veröffentlichungstag und Bekanntmachung des Hinweises auf die Patenterteilung: **25.06.2003**
(21) Anmeldenummer: 99926242.1
(22) Anmeldetag: 14.04.1999
(51) Int. Cl.: G05B 19/42

(54) **SOFTWAREKOMPONENTE FÜR EIN DIAGNOSESYSTEM MIT ASSISTENTENUNTERSTÜTZTER PROJEKTIERUNG**
SOFTWARE COMPONENT FOR A DIAGNOSTIC SYSTEM WITH ASSISTANT-SUPPORTED CONFIGURING
COMPOSANTE LOGICIELLE POUR UN SYSTEME DE DIAGNOSTIC AVEC PROJECTION ASSISTEE

(30) Priorität: 17.04.1998 DE 19817138
(43) Veröffentlichungstag der Anmeldung: 31.01.2001
(73) Patentinhaber: SIEMENS AKTIENGESELLSCHAFT, 80333 München (DE)
(72) Erfinder: MAIER, Karl-Heinz, D-90489 Nürnberg (DE); VÖLKEL, Thomas, D-95138 Bad Steben (DE); KAISER, Lilian, D-70435 Stuttgart (DE); KRÄMER, Rolf, D-91074 Herzogenaurach (DE)
(86) Internationale Anmeldenummer: DE9901119
(87) Internationale Veröffentlichungsnummer: WO99054794

(56) Entgegenhaltungen:
- EP-A- 0 283 382
- EP-A- 0 643 345
- EP-A- 0 694 825
- WO-A-93/05477
- WO-A-98/01728
- WO-A-98/14847
- US-A- 5 691 909
- AHRENS W ET AL: "INTERKAMA 95: CAE-SYSTEME FUER DIE PROZESSLEITTECHNIK" AUTOMATISIERUNGSTECHNISCHE PRAXIS - ATP, Bd. 38, Nr. 3, 1. März 1996 (1996-03-01), Seiten 18-20, 22 - 24,, XP000580141 ISSN: 0178-2320

## Beschreibung

Die Erfindung betrifft eine Softwarekomponente für ein insbesondere akustisches Diagnosesystem zur insbesondere automatischen Qualitätskontrolle von Prüfobjekten, insbesondere von Motoren, von Keramiken etc..

Ein derartiges Prüfsystem bzw. Prüfverfahren kommt beispielsweise im Bereich der akustischen Signalerfassung sowie Signalauswertung zum Einsatz. Hierbei ist häufig eine Mischung aus Meßhardware und Signalverarbeitungssoftware miteinander zu kombinieren, wobei aufgrund der Komplexität der Zusammenhänge für einen derartigen Meßaufbau häufig das Wissen und die Erfahrung von Spezialisten erforderlich sind.

Aus WO 98/01728 ist eine Vorrichtung zur Erfassung von analogen Meßsignalen für die akustische Diagnose von Prüflingen bekannt. Dabei können mit Hilfe von Schwingungsaufnehmern von einem Prüfling analoge Meßsignale aufgenommen werden. Ein Computer ist mit einer standardmäßigen Schnittstellenkarte ausgerüstet, welche zur Digitalisierung der Meßsignale dient. Ein Schaltsignal dient zur Erzeugung eines Triggersignals, welches über eine bevorzugt serielle Schnittstelle eingebbar ist. Ein Steuerprogramm im Computer schaltet über das Triggersignal die Eingabe von Meßsignalen ein und aus.

EP 0 694 825 A2 beschreibt ein System zur Anlagenunterstützung, bei welchem zur Fehlerdiagnose Wissensbasen genutzt werden, welche Informationen über Zustände von Anlagenkomponenten, über den Datenfluss innerhalb der Anlage, über Steuerbefehle und über den Aufbau der Anlage speichern.

Aus EP 0 643 345 B1 ist eine Datenverarbeitungsanlage bekannt, welche Betriebszustände einer technischen Anlage mittels die Betriebszustände charakterisierenden Messwerte und mittels zum Betrieb der Anlage relevanten gespeicherten technologischen Wissens überwacht.

WO 93/05477 beschreibt ein System zur Erstellung einer Störungsdiagnose an Produktionsmaschinen und die Anwendung des Systems an Textilmaschinen. Dabei erfolgt die Erstellung der Störungsdiagnose anhand einer wissensbasierten Auswertung von Signalen, welche die Qualität der hergestellten Produkte signalisieren, beispielsweise anhand von bei der Untersuchung von Parametern textiler Faser- und Filamentverbände gewonnener Spektrogramme. Es ist eine erste Auswerteeinheit zur Detektion von charakteristischen Abweichungen der Spektrogramme vorgesehen, welche für jede derartige Abweichung einen sogenannten Störungsdeskriptor generiert. Eine zweite Auswerteeinheit ermittelt für jeden Störungsdeskriptor anhand einer Wissensbasis mögliche Störungsursachen.

Der Erfindung liegt die Aufgabe zugrunde, eine Softwarekomponente für ein akustisches Diagnosesystem anzugeben, das über eine einheitliche Anwenderschnittstelle verfügt und auf einfache Weise parametrierbar ist.

Diese Aufgabe wird durch eine Softwarekomponente mit den im Anspruch 1 angegebenen Merkmalen gelöst.

Die so ausgebildete Softwarekomponente weist somit gegenüber dem Anwender eine einheitliche und sowohl für eine Projektierung des Diagnosesystems als auch für die Prüfobjektbeschreibung einheitlich zu nutzende Oberflächenkomponente auf. Interpreter und Wissensbasis bilden dabei als Assistent eine Einheit, über deren Schnittstellen die Projektierungskomponente, Prüfobjektkomponente und die Hardwarekomponenten koppelbar sind.

Eine benutzerfreundliche Schnittstelle zu einem Anwender der Softwarekomponente kann dadurch erzielt werden, daß die Prüfobjektkomponente und/oder eiune Analysenmethodenkomponente als OLE-Objekt ausgebildet sind.

Ein übersichtliche Verwaltung der Eigenschaften der Prüfobjekte kann in der Weise erfolgen, daß die Eigenschaften der Prüfobjekts als Variablenwerte in der Prüfobjektkomponente gespeichert sind.

Eine assistentengetützte Anbindung zwischen Wissensbasis und Profobjektkomponente kann dadurch realisiert werden, daß die Variablenwerte der Prüfobjektkomponente von der Wissensbasis über eine Schnittstelle zur Verfügung stehen.

Eine effektiver Zugriff auf Variablenwerte der Prüfobjektkomponente kann dadurch erzielt werden, daß der Zugriff auf Variablenwerte der Prüfobjektkomponente über eine Prolog-ähnliche Sprache erfolgt.

Im folgenden wird die Erfindung anhand des in der Figur dargestellten Ausführungsbeispiels näher beschrieben und erläutert.

Es zeigt:

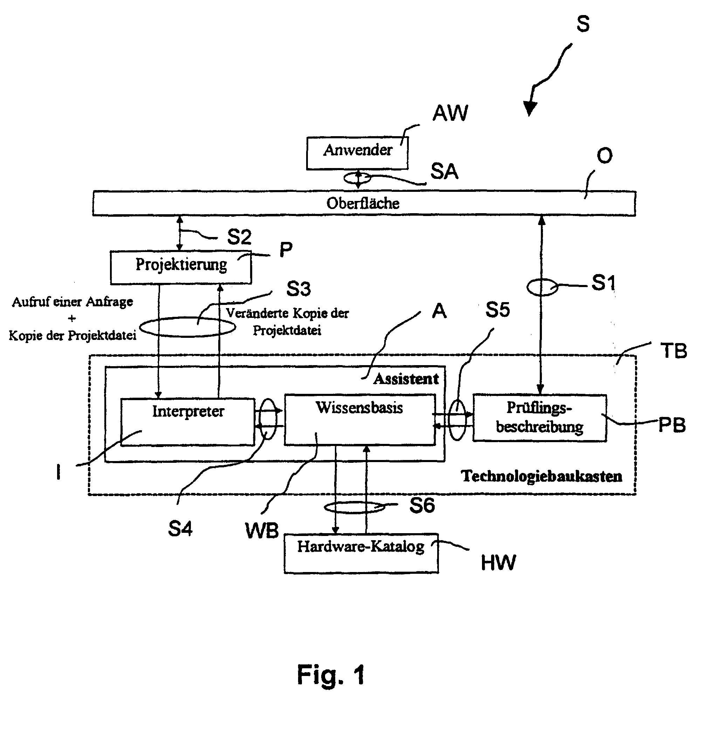

- FIG 1: eine Prinzipdarstellung einer Softwarekomponente für ein Diagnosesystems zur Diagnose eines Prüfobjekts.

Fig. 1 zeigt das Funktionsprinzip Softwarekomponente S mit einer assistentenunterstützten Projektierung. Die Softwarekomponente S weist über eine Oberflächenkomponente O eine Schnittstelle SA zu einem Anwender AW auf. Die Oberflächenkomponente O ist über eine erste Schnittstelle S1 mit einer Prüfobkjektkomponente PB und über eine zweite Schnittstelle S2 mit einer Projektierungskomponente gekoppelt. Die Prüfobjektkomponente PB ist Teil eines Technologiebaukasten TB. Der Technologiebaukasten TB enthält darüber hinaus einen Interpreter I sowie eine Wissensbasis WB als Assistenten AS. Zwischen Interpreter I und Projektierungskomponente P ist eine dritte Schnittstelle S3 vorgesehen, während im Technologiebaukasten TB zwischen Interpreter I und Wissensbasis WB eine vierte Schnittstelle S4 und zwischen Wissensbasis WB und Prüfobjetkomponente PB eine fünfte Schnittstelle vorgesehen sind. Über eine sechste Schnittstelle S6 ist der Technologiebaukasten TB mit einem Hardwarekatalog gekoppelt.

Die in Fig. 1 dargestellte Softwarekomponente S ist beispielsweise für ein akustisches Diagnosesystem einsetzbar. Standardsystem zur akustischen Diagnose, das für bestimmte Einsatzgebiete über einen wissensbasierten Ansatz die Benutzerunterstützung beim Einrichten bietet. Mit diesem System können aus den vibroakustischen Signalen von Prüfobjekten Kennwerte berechnet werden, die die automatische Bewertung des Prüfobjektzustands ermöglichen.
Zunächst ist das Diagnosesystem ein "Softwaretool" zur automatischen Signalanalyse und Diagnose. Es ist speziell für die Analyse von vibroakustischen Signalen ausgelegt, kann aber generell zur Auswertung beliebiger Meßsignale genutzt werden. Mögliche Einsatzgebiete sind die automatisierte Qualitätskontrolle in der Fertigung und die Zustandsüberwachung von Maschinen. Zur Aufnahme der Signale werden in der ersten Version PC-Soundkarten eingesetzt.
Von anderen akustischen Diagnosesystemen unterscheidet sich das beschriebene akustische Diagnosesystem (= "AKUT"-System) vor allem dadurch, daß es eine Standardlösung ist, während die meisten Systeme Einzellösungen für spezielle Aufgaben bieten. Somit kann das System universell und flexibel eingesetzt werden. Dadurch ermöglicht es auch im Gegensatz zur Einzellösung die Anpassung an sich ändernde Anforderungen. Um Benutzer mit geringen schwingungstechnischen Kenntnissen bei der Einrichtung der Diagnoseaufgabe zu unterstützen, werden zusätzlich für spezielle Anwendungsfälle wissensbasierte Technologiebaukästen erstellt. Die Benutzerunterstützung erfolgt über einen Software-Assistenten, der Vorschläge zu den einzelnen Projektierschritten liefert. Diese Vorschläge kann der Benutzer dann annehmen oder verwerfen.
Das System bietet die folgenden Funktionen:
- Kernfunktionen: Signalerfassung, Signalspeicherung und Signalanalyse,
- Projektierung: Konfigurierung und Parametrierung des Systems, entweder "manuell" oder mit Software-Assistent,
- Kalibrierung und Justierung: Vergleich der am Ende der Meßkette erfaßten Meßgrößen mit einem "Normal" (Kalibriersignal),
- Automatikbetrieb: Aufnahme und Auswertung im Prüfbetrieb, automatische Klassifizierung der Prüfobjekte,
- Hardwarekatalog und Hardwarekatalog-Manager: Datenbank über Sensoren, Stromversorgungen etc. und deren Verwaltung,
- SPS-Anbindung: Anbindung in den Produktionsprozeß (Triggerung, Meldungen über die Klassifikation der Prüfobjekte),
- wissensbasierte Technologiebaukästen: beinhalten akustisches und technologiespezifisches Expertenwissen und unterstützen den Benutzer bei der Projektierung des Systems durch einen Software-Assistenten.

Zur Projektierung einer Diagnoseaufgabe mit der in Fig. 1 dargestellten Softwarekomponente S sind folgende Schritte erforderlich:
- Hardware festlegen und Hardwareeinstellungen vornehmen,
- Signale typischer Prüflinge aufnehmen,
- Analyseverfahren konfigurieren,
- Merkmale definieren,
- Einstellen der Schwellen zur Klassifikation,
- Parametrierung des Automatikbetriebs.

Der Technolgiebaukasten TB im Projekt ist beispielsweise für die Diagnose von Elektromotoren entwickelt. Er enthält Fachwissen über Schwingungstechnik und Elektromotoren. Der Technologiebaukasten soll zwei Aufgaben erfüllen. Er muß zum einen die Prüflingsbeschreibung, d.h. die Beschreibung des zu prüfenden Motors, erfassen. Zum anderen unterstützt er über einen Assistenten die Projektierung durch Vorschläge.
Es werden folgende Projektierungsschritte unterstützt:
- Hardwareprojektierung: Vorschläge für Sensoranschlußpunkte am Motor, Auswahl der Sensoren, Baugruppen, etc., Konfigurierung der Hardware, Prüfablauf parametrieren
- Konfiguration der Analyseverfahren: Vorschläge für Analyseverfahren und deren Parametrierung
- Merkmalsdefinition: Vorschläge zur Berechnung von qualitätsbeschreibenden Kenngrößen aus den Analyseverfahren Fig. 1 verdeutlicht den Aufbau des Technologiebaukastens und das Funktionsprinzip der assistentenunterstützten Projektierung.

Zunächst muß der Anwender AW über die Oberflächenmaske O die Prüflingsbeschreibung erstellen. Um dann Vorschläge zu den Projektierschritten zu erhalten, ruft er über die Oberfläche eine der Anfragen für Vorschläge auf. Diese Anfrage wird von der Projektierung an den Assistenten AS weitergeleitet. Gleichzeitig wird eine Kopie der Projektdatei übergeben. Die Suche nach Vorschlägen wird vom Interpreter durchgeführt, der die zentralen Problemlösungskomponente des Assistenten darstellt. Er greift dafür auf die Wissensbasis zu, die mit der Prüflingsbeschreibung und dem Hardware-Katalog verbunden ist. Die Wissensbasis beinhaltet das Fachwissen über Schwingungstechnik und Elektromotoren. Sie beschreibt die Zusammenhänge zwischen den Eigenschaften des Prüflings, seinem Schwingungsverhalten und den Anforderungen an Hardware und Prüfablauf, die daraus resultieren. Zur Vorschlagsermittlung verwendet die Wissenbasis Daten aus der Prüflingsbeschreibung, dem Hardware-Katalog und der Projektdatei. Durch den Assistenten werden die Vorschläge in die übergebene Kopie der Projektdatei eingefügt. Diese wird dann an die Projektierung zurückgegeben und auf der Oberfläche angezeigt. Hier kann der Anwender AW dann entscheiden, ob er die Vorschläge ganz oder teilweise annimmt oder ablehnt. Bei Annahme wird der betreffende Teil der Kopie in die aktuelle Projektdatei übernommen.
Die vorliegende Arbeit behandelt im Rahmen des "Technologiebaukastens Elektromotoren" den Wissenserwerb und den Aufbau der Wissensbasis für die Projektierschritte "Konfiguration der Analyseverfahren" und "Merkmalsdefintion". Zunächst wird der Wissenserwerb zur Diagnose von Elektromotoren anhand ihres Schwingungsverhaltens durchgeführt. Hier wird zum einen bestimmt, welche Parameter die Prüflingsbeschreibung enthalten muß. Zum anderen wird untersucht, mittels welcher Analyseverfahren und Merkmale bestimmte Fehler identifiziert werden können. Zu den Fehler, die dabei berücksichtigt werden sollen, gehören beispielsweise Lagerschäden, Unwuchten, Ausrichtfehler, anstreifende oder lose Teile und 100 Hz-Brummen. Aus dem gewonnenen Wissen wird dann ein Prototyp der Wissensbasis in Prolog erstellt. So kann die Wissensbasis unabhängig vom "AKUT"-System getestet werden und die Schnittstellen für die Wissensbasis des Assistenten festgelegt werden. Die vollständige Implementierung der Assistenten-Wissensbasis ist nicht Bestandteil dieser Arbeit, da sie von anderen Arbeiten abhängt, die die Implementierung der Schnittstellen betreffen. Allerdings sollte die Übertragbarkeit der Prototypstruktur in diese Wissensbasis durch ihren modularen Aufbau und die Festlegung der Schnittstellen problemfrei möglich sein.

Der wissensbasierte Ansatz wurde für die Technologiebaukästen aus mehreren Gründen gewählt. Zum einen wird auf diese Weise das Wissen explizit, deklarativ und nichtalgorithmisch beschrieben. Diese Art der Beschreibung eignet sich sehr gut für Suchaufgaben, wie sie für die Ermittlung der Vorschläge notwendig sind. Zusätzlich erleichtert die deklarative Beschreibung die Lesbarkeit der Programme und vereinfacht die Wartung und Erweiterung des enthaltenen Wissens. Gleichzeitig ist eine modulare Strukturierung der Wissensbasis möglich. So kann spezielles Wissen eines Technologiebaukasten lokalisiert und in einen anderen übernommen werden, ohne daß große Änderungen nötig sind. Zum anderen kann durch diesen Ansatz der wissensbasierte Teil nach Änderungen separat neu kompiliert werden, so daß die Wissensbasis unabhängig vom übrigen akustischen Diagnosesystem (= "AKUT"-System) verändert und erweitert werden kann.

Die vibroakustische Qualitätskontrolle ist aus der Fertigung von Elektromotoren nicht mehr wegzudenken. Anhand von Schwingungs- und Schallanalysen ermöglicht sie auf einfache Weise die Erkennung und Klassifizierung bestimmter Qualitätsfehler.
In vielen Fällen wird die akustische Kontrolle auch heute noch vom Prüfpersonal über den subjektiven Wahrnehmungseindruck des Motorgeräuschs durchgeführt.
Um diese akustische Prüfung zu automatisieren und eine objektive Klassifizierung der Motoren zu erhalten, werden vermehrt automatische Diagnosesysteme eingesetzt. Am häufigsten trifft man hier auf speziell für einen Motortyp erstellte Einzellösungen. Die Konfigurierung dieser Systeme ist meist sehr aufwendig und wird von Experten übernommen. Diese spezifizieren das Überwachungsverfahren für den Motor und erstellen eine Softwarelösung für die Diagnose.
Solche Diagnosesysteme basieren oft auf einer Modellbildung. Zu diesem Zweck wird ein mathematisches Modell des zu prüfenden Motors erstellt. Durch Modellparameter werden seine physikalischen Eigenschaften beschrieben. Zur Prüfung der Motoren werden die Parameter des jeweiligen Motors aus den aufgezeichneten Zeitfunktionen und dem Modell geschätzt. Weichen die geschätzten Parameter von den Parameter eines intakten Motors ab, kann auf eine Störung bzw. einen Defekt geschlossen werden.

Ein anderer Ansatz zur automatischen Diagnose beruht auf den Methoden der künstlichen Intelligenz. Dabei wird die Entscheidungsfindung bei der Klassifizierung der Motoren über ein wissensbasiertes System durchgeführt. Wissensbasierte Systeme enthalten zumeist sowohl analytisches Wissen über den Prozeß und seine Daten als auch heuristisches Wissen über Problemlösungsstrategien. Zur automatischen Diagnose werden z.B. über "Wenn-dann"-Regeln die Zusammenhänge zwischen Fehlern und Symptomen in sogenannten Fehlerbäumen beschrieben. Aufgrund dieser Beschreibung wird dann durch Schlußfolgerungen die Fehlerdiagnose durchgeführt. Diese Ansätze konnten sich bisher nicht durchsetzen, weil zum einen die Wissensakquisition für solche wissensbasierte Diagnosesysteme sehr aufwendig ist. Zum anderen sind sie aufgrund der unvorhersehbaren Bearbeitungszeit nicht echtzeitfähig.
Bei existierenden Standardsystemen für die akustische Diagnose muß der Benutzer ausgeprägte Kenntnisse in Schwingungsmeßtechnik und -analyse besitzen, um das System einrichten zu können.

Eine Möglichkeit, um das Einrichten akustischer Diagnosesysteme zu vereinfachen, ist die Benutzerunterstützung bei der Sensorauswahl und Konfiguration, der Wahl der Analyseverfahren und der Bestimmung der Merkmale zur Klassifikation. Hier bietet sich der Einsatz wissensbasierter Systeme an, da für diese Aufgabe der Entwicklungsaufwand nach relativ klein ist. Zudem ist keine Echtzeitfähigkeit notwendig, da das Einrichten im Gegensatz zur Klassifikation keine zeitkritische Aufgabe ist.

Im folgenden soll kurz erläutert werden, wie die Wissensbasis in das "AKUT"-System integriert wird und auf welche Weise sie eingesetzt wird. Des weiteren wird auf die Besonderheiten bei der Umsetzung des Prototyps eingegangen.

Fig. 1 zeigt den Aufbau des Assistenten und das Zusammenspiel mit den anderen Systembestandteilen. Der "Technologiebaukasten Elektromotoren" besteht aus zwei Hauptkomponenten. Die erste Komponente übernimmt die Erfassung und Verwaltung der Prüflingsbeschreibung. Dabei handelt es sich um ein OLE-Objekt. OLE ist die Abkürzung für "Object Linking and Embedding". Diese Technologie ermöglicht es, daß verschiedene Software-Komponenten über eine definierte Schnittstelle auf die Dienste des OLE-Objektes zugreifen können. Im "AKUT"-System sind z.B. auch die Analysemethoden OLE-Objekte.

Die zweite Komponente ist der "Assistent". Er besteht aus zwei Unterkomponenten, dem Interpreter und der Wissensbasis. Wenn der Anwender über die Oberfläche eine der Anfragen für Vorschläge aufruft, wird diese an die Projektierung weitergeleitet. Die Projektierung erstellt eine Kopie der Projektdatei, die alle Einstellungen und Objekte enthält, die für den Assistenten relevant sind. Sie enthält z.B. auch die Sytemeinstellungen wie Abtastfrequenz und eingerichtete Analysemethoden. Diese Kopie wird zusammen mit der Anfrage an den Interpreter übergeben, der die Anfrage als Regel interpretiert. Der Interpreter sucht mit Hilfe der Wissensbasis nach den Vorschlägen für die Anfrage. Der Wissensbasis stehen dafür auch die Prüflingsbeschreibung und der Hardware-Katalog zur Verfügung. Die Vorschläge werden dann durch Veränderung der kopierten Projektdatei erstellt. Diese wird an die Projektierung zurückgegeben.

Der Assistent besitzt innerhalb des Systems keine eigene Oberfläche. Um Interpreter, Wissensbasis und das Zusammenspiel mit den anderen Software-Objekten testen zu können, existiert eine Testumgebung mit einer Oberfläche. Diese Oberfläche zeigt die Wissensbasis an und ermöglicht Anfragen an den Interpreter.

Im Gegensatz zum Prototyp werden die Motoreigenschaften innerhalb des Systems nicht als Fakten in der Wissensbasis gespeichert, sondern als Variablenwerte in der Prüflingsbeschreibung. Bei dieser Prüflingsbeschreibung handelt es sich um ein OLE-Objekt. Über eine Schnittstelle stehen die Werte der Wissensbasis zur Verfügung. Der Wert für die Polzahl kann z.B. so abgefragt werden:
*kOleSpecimen (vNumPoles,X)*

Das sieht auf den ersten Blick wie eine gewöhnliche Prolog-Klausel aus. Allerdings kann diese Klausel nicht immer wie eine Prolog-Klausel verwendet werden. Wenn die obige Form im Regelrumpf verwendet wird, wird *X* mit dem vorliegenden Wert instanziiert. Wird die Klausel aber im Regelrumpf folgendermaßen aufgerufen
*kOleSpecimen (vNumPoles, 2)*,
so würde das nicht wie eine Prologklausel interpretiert, die nach einem entsprechenden Fakt sucht. Statt dessen wird die Polzahl in der Prüflingsbeschreibung auf 2 gesetzt. Um die Überprüfung dieses Wertes zu ermöglichen, muß die Formulierung so lauten:
*kOleSpecimen(vNumPoles,X), X = 2*

Ein weiterer Unterschied zum Prototyp ist die Verwaltung von Lager- und Lüfter-eigenschaften. Die Komponenten wie Lager, Lüfter und Gehäuse werden im OLE-Objekt als Liste gehandhabt, auf deren Elemente über ID-Nummern zugegriffen werde kann. Um z.B. auf ein Lager zuzugreifen, muß die Liste durchsucht werden, bis eine Komponente mit dem Typ "Lager" gefunden wird. Über deren ID-Nummer können dann die anderen Parameter bestimmt werden.

Diese Unterschiede im Zugriff auf Motoreigenschaften erfordern eine Anpassung des Prototyps, indem Regeln geschrieben werden, die die Schnittstellenfunktionen in geeigneter Weise benutzen.

Bevor anhand eines Beispiels kurz auf diese Anpassung des Prototyps eingegangen wird, werden noch einige Besonderheiten in der Syntax des Assistenteninterpreters erläutert.
Die Syntax des Interpreters weicht zum Teil etwas von der allgemeinen Prolog-Syntax ab. Beispielsweise wird der Vergleich nicht über "=", sondern ebenso wie die Wertzuweisung über "*is*" durchgeführt. Die Listenverarbeitung ist nicht in so komplexer Weise möglich, wie das mit der üblichen Prolog-Syntax der Fall ist. Zudem existieren die Buildin-Prädikate "*assert*" und "*retract*" nicht, so daß es keine Möglichkeit gibt, Fakten in einer dynamischen Datenbank abzulegen. Dies ist allerdings auch nicht nötig, da das Einbinden der Vorschläge durch Erzeugen von OLE-Objekten erfolgt. Diese werden dann in die Kopie des Projektdatei eingefügt.
Das folgende Beispiel verdeutlicht, wie die Unterschiede im Zugriff auf die Motordaten bei der Umsetzung des Prototyps berücksichtigt werden. In diesem Fall geht es um die Bestimmung der ID-Nummer von Lagern. Alle Komponenten wie Gehäuse, Lager und Lüfter stehen in einer Liste, die sich im OLE-Objekt der Prüflingsbeschreibung befindet. Ihre ID-Nummer, durch die sie in der Liste zu identifizieren sind, wird beispielsweise auch benutzt, um die Position von Sensoranschlußpunkten festzulegen. Mit der Funktion
*kOleSpecimen (fEnumComponents,ID,1,OK)*
wird die ID des ersten Elements der Liste bestimmt. Der dritte Parameter, die *1*, bedeutet hier, daß das erste Element gesucht wird. Für alle weiteren Elemente steht an dieser Stelle eine *0.* Der Parameter *OK* erhält einen positiven Wert, wenn die Funktion fehlerfrei ausgeführt wurde. Mit der Funktion
*kOleSpecimen(fGetComponentType,ID,Type,OK)*
wird der Typ der Komponente bestimmt. Mit der Funktion *var(ID)* wird überprüft, ob *ID* eine ungebundene Variable ist. Die ID-Nummer eines Lagers wird mit Hilfe dieser Funktionen über folgende Regeln bestimmt:
Für das erste Element wird diese Regel ausgeführt:
*getBearingID(Id) : -*
*var(Id),*
*kOleSpecimen (fEnumComponents,Id,1,OK), OK>0,*
*kOleSpecimen(fGetComponentType,Id,T,OK1), OK1 > 0,*
*T is kBearing.*

Sie wird erfolgreich durchgeführt und liefert die ID-Nummer eines Lagers, wenn *ID* eine ungebundene Variable, also nicht instanziiert, ist und das erste Element der Liste vom Typ "kBearing" (Lager) ist.
Für die weiteren Elemente werden die folgenden Regeln benötigt:
*getBearingID(Id) : -*
*var(Id),*
*kOleSpecimen(fEnumComponents,I,0,OK), OK>0,*
*getBearingIDx(Id,I,OK).*
*getBearingIDx(Id,I,A) : -*
*A>0,kOleSpecimen (fGetComponentType, I, Type, OK2), OK2 > 0,*
*Type is kBearing, Id is I.*
*getBearingIDx(Id,_,A) : -*
*A>0, kOleSpecimen(fEnumComponents,I,0,OK), OK>0,*
*getBearingIDx(Id,I,OK).*

Die etwas komplizierte Vorgehensweise über die letzten beiden Regeln *getBearingIDx* ist nötig, um alle Komponenten durchzugehen.
Kennt man eine Komponenten-ID und möchte prüfen, ob es sich bei dieser Komponente um ein Lager handelt, wird das über folgende Regel durchgeführt, bei der ID mit einem Wert instanziiert sein muß:
*getBearingID(Id): -*
*nonvar (Id),*
*kOleSpecimen(fGetComponentType,Id,Type,OK2), OK2 > 0,*
*Type is kBearing.*

Auf eine ähnliche Art wird auch auf die anderen Motoreigenschaften und auf die Liste der Sensoranschlußpunkte zugegriffen.

Der Prototyp wurde, soweit es die bereits vorhandenen Schnittstellen zulassen, in die Wissensbasis des Assistenten umgesetzt und in der Testumgebung überprüft. Die fehlenden Schnittstellen betreffen vor allem die Erzeugung der OLE-Objekte für Analysemethoden und Merkmale. Diese müssen in die Kopie der Projektdatei einbracht werden. In der Wissensbasis wurden bereits Regeln implementiert, die die Bedingungen und Parameter für die Analysemethoden und Merkmale festlegen. Diese können, wenn die Schnittstellen geschaffen wurden, zur Erzeugung der Vorschläge eingesetzt werden.
Nachdem der Zugriff auf die Daten der OLE-Objekte über Regeln berücksichtigt wurde, funktioniert die Wissensbasis des Assistenten in ähnlicher Weise wie der Prototyp.

Zusammenfassend betrifft die Erfindung somit eine Softwarekomponente S für ein akustisches Diagnosesystem zur insbesondere automatischen Qualitätskontrolle von Prüfobjekten, insbesondere von Motoren, von Keramiken etc., mit einem Hardwarekatalog HW als Sofwareabbild von Hardwarekomponenten, insbesondere von Sensorik zur Wandlung von mechanischen Schwingungen in elektrische Signale E, mit einem Assistenten A, der aus einer Wissensbasis WB und einem Interpreter I gebildet wird, und mit einer Projektierungskomponente P zur Projektierung des Diagnosesystems und mit einer Oberflächenkomponente O zur Kommunikation zwischen einem Anwender A und der Projektierungskomponente P und einer Prüfobjektbeschreibungskomponente PB zur Beschreibung eines Prüfobjekts vorgesehen ist. Vorteilhafterweise ist die Prüfobjektbeschreibungskomponente PB als OLE-Objekt ausgebildet.

## Patentansprüche

1. Softwarekomponente (S) für ein akustisches Diagnosesystem zur Qualitätskontrolle von Prüfobjekten, insbesondere von Motoren, von Keramiken etc., mit einem Hardwarekatalog (HW) als Softwareabbild von Hardwarekomponenten, insbesondere von Sensorik zur Wandlung von mechanischen Schwingungen in elektrische Signale, mit einem Assistenten (A) zur Benutzerunterstützung, der aus einer Wissensbasis (WB) und einem Interpreter (I) gebildet wird, und mit einer Projektierungskomponente (P) zur Projektierung des Diagnosesystems und mit einer Oberflächenkomponente (O), die zur Kommunikation zwischen einem Anwender (AW) und der Projektierungskomponente (P) und einer Prüfobjektkomponente (PB) zur Beschreibung eines Prüfobjekts vorgesehen ist.

2. Softwarekomponente nach Anspruch 1,
**dadurch gekennzeichnet,**
**daß** die Prüfobjektkomponente (PB) als OLE-Objekt ausgebildet ist.

3. Softwarekomponente nach einem der Ansprüche 1 oder 2,
**dadurch gekennzeichnet,**
**daß** die Eigenschaften der Prüfobjekte als Variablenwerte in der Prüfobjektkomponente (PB) gespeichert sind.

4. Softwarekomponente nach einem der Ansprüche 1 bis 3,
**dadurch gekennzeichnet,**
**daß** die Variablenwerte der Prüfobjektkomponente (PB) von der Wissensbasis (WB) über eine Schnittstelle (S6) zur Verfügung stehen.

5. Softwarekomponente nach einem der Ansprüche 1 bis 4,
**dadurch gekennzeichnet,**
**daß** der Zugriff auf Variablenwerte der Prüfobjektkomponente über eine Prolog-ähnliche Sprache erfolgt.

## Claims

1. Software component (S) for an acoustic diagnostic system for quality control of test objects, in particular motors, ceramics, etc., with a hardware catalogue (HW) which includes software images of hardware components, in particular of sensor mechanisms for converting mechanical vibrations into electrical signals, with an assistant (A) for user support, comprising a knowledge base (WB) and an interpreter (I), and with a planning component (P) to plan the diagnostic system and with a user interface component (O) to facilitate communication between a user (AW), the planning component (P) and a test object component (PB) for describing a test object.

2. Software component according to Claim 1, **characterised in that** the test object component (PB) is formed as an OLE object.

3. Software component according to one of Claims 1 or 2, **characterised in that** the properties of the test object are stored as values of variables in the test object component (PB).

4. Software component according to one of Claims 1 to 3, **characterised in that** the values of variables of the test object component (PB) of the knowledge base (WB) are available via an interface (S6).

5. Software component according to one of Claims 1 to 4, **characterised in that** access to values of variables of the test object component takes place via a language similar to PROLOG.

## Revendications

1. Composante logicielle (S) pour un système de diagnostic acoustique en vue du contrôle de qualité d'échantillons, notamment de moteurs, de céramiques, etc., avec un catalogue de matériels (HW) comme image logicielle de composantes matérielles, notamment de capteurs pour la transformation d'oscillations mécaniques en signaux électriques, avec un assistant (A) qui est destiné à assister l'utilisateur et qui est formé d'une base de connaissances (WB) et d'un interpréteur (I), et avec une composante de développement (P) pour le développement du système de diagnostic et avec une composante d'interface (O) qui est prévue pour la communication entre un utilisateur (AW) et la composante de développement (P) et une composante d'échantillon (PB) pour la description d'un échantillon.

2. Composante logicielle selon la revendication 1, **caractérisée par le fait que** la composante d'échantillon (PB) est conçue comme un objet OLE.

3. Composante logicielle selon l'une des revendications 1 ou 2, **caractérisée par le fait que** les propriétés des échantillons sont mémorisées en tant que valeurs de variables dans la composante d'échantillon (PB).

4. Composante logicielle selon l'une des revendications 1 à 3, **caractérisée par le fait que** les valeurs de variables de le composante d'échantillon (PB) sont à disposition de la base de connaissances (WB) par l'intermédiaire d'une interface (S6).

5. Composante logicielle selon l'une des revendications 1 à 4, **caractérisée par le fait que** l'accès à des valeurs de variables de la composante d'échantillon s'effectue par l'intermédiaire d'un langage semblable au Prolog.
